# EUROPEAN PATENT SPECIFICATION

(11) **EP 4 311 002 B1**
(45) Date of publication and mention of the grant of the patent: **09.07.2025**
(21) Application number: 23763666.7
(22) Date of filing: 23.02.2023
(51) Int. Cl.: H01M 50/105, H01M 50/209

(54) **BATTERY MODULE WITH REINFORCED SAFETY**
BATTERIEMODUL MIT VERSTÄRKTER SICHERHEIT
MODULE DE BATTERIE À SÉCURITÉ RENFORCÉE

(30) Priority: 02.03.2022 KR 20220026811
(43) Date of publication of application: 24.01.2024
(73) Proprietor: LG ENERGY SOLUTION, LTD., Seoul 07335 (KR)
(72) Inventor: LEE, Bum-Hyun, Daejeon 34122 (KR); SEONG, Jun-Yeob, Daejeon 34122 (KR)
(74) Representative: Plasseraud IP
(86) International application number: PCT/KR2023/002619
(87) International publication number: WO 2023/167467

(56) References cited:
- WO-A1-2021/107336
- WO-A1-2021/200941
- WO-A1-2021/200941
- JP-A- 2021 093 296
- KR-A- 20210 010 239
- KR-A- 20210 051 543
- KR-A- 20210 063 939
- KR-B1- 102 083 657
- US-A1- 2019 027 719
- US-B2- 10 446 813

## Description

### TECHNICAL FIELD

The present application claims priority to Korean Patent Application No. 10-2022-0026811 filed on March 2, 2022 in the Republic of Korea.

The present disclosure relates to a battery, and more particularly, to a battery module with reinforced safety, and a battery pack and a vehicle including the battery same.

### BACKGROUND ART

As the demand for portable electronic products such as notebook, video cameras and cellular phones is rapidly increasing and robots and electric vehicles are commercialized in earnest, high-performance secondary batteries capable of repeated charging and discharging are being actively researched.

Currently commercialized secondary batteries include nickel cadmium battery, nickel hydrogen battery, nickel zinc battery, lithium secondary battery, and so on. Among these, the lithium secondary battery has almost no memory effect to ensure free charge and discharge, compared to the nickel-based secondary battery, and the lithium secondary battery is spotlighted due to a very low discharge rate and a high energy density.

The lithium secondary battery mainly uses a lithium-based oxides and a carbon material as a positive electrode active material and a negative electrode active material, respectively. The lithium secondary battery includes an electrode assembly in which a positive electrode plate and a negative electrode plate respectively coated with the positive electrode active material and the negative electrode active material are disposed with a separator being interposed therebetween, and an exterior, or a battery case, for hermetically accommodating the electrode assembly together with an electrolyte.

Generally, the lithium secondary batteries may be classified into a can-type secondary battery having an electrode assembly included in a metal can and a pouch-type secondary battery having an electrode assembly included in a pouch of an aluminum laminate sheet, depending on the shape of the exterior.

Recently, secondary batteries are widely used for driving or energy storage not only in small devices such as portable electronic devices but also in medium and large devices such as electric vehicles and energy storage systems (ESS). These secondary batteries may constitute one battery module in such a form that a plurality of secondary batteries are electrically connected and are stored together in a module case. In addition, a plurality of battery modules may be connected to form one battery pack.

Since a plurality of battery cells are included in the battery module, when a thermal runaway situation occurs in some battery cells, the thermal runaway situation can be easily propagated to other battery cells. Moreover, when thermal runaway occurs in some battery cells, a venting gas may be generated, and it is necessary to quickly discharge the venting gas to the outside from inside the battery module. If the discharge of the venting gas is delayed, the structure of the battery module, such as a module case, may be deformed by the pressure of the venting gas, so that the battery module may be damaged, destroyed or exploded. Also, oxygen may be introduced through the deformed part of the module case, and in this case, a fire inside the battery module may be caused or amplified due to the introduced oxygen.

In addition, when an event such as thermal runaway occurs in any one battery module, a flame or the like may be discharged to the outside. At this time, if the discharge of the flame is not properly controlled, the flame or the like may be discharged toward other battery modules, and there is a risk of causing a thermal chain reaction of other battery modules. Moreover, when a thermal event occurs inside the battery module, ignition triggers that can cause ignition, such as sparks, electrode discharge, and carbides, may be generated along with a large amount of combustible gas. In addition, when these ignition triggers are discharged to the outside when gas is discharged, there is a risk of encountering oxygen and causing a fire.

In addition, the battery module is required to have various other safety performances such as waterproof or dustproof. In particular, the battery module needs to have a structure for discharging gas to the outside, and also the inflow of moisture or dust through the corresponding discharging structure needs to be blocked.

Document JP 2021 093296 A discloses a battery module, comprising a cell assembly including at least one battery cell, a module case suitable for accommodating the cell assembly in an inner space thereof and having a venting hole formed to discharge a gas in the inner space to the outside, a filtering member provided in the inner space of the module case and suitable for filtering foreign matter from flowing into the inner space from the outer space through the venting hole, and a plurality of mesh members respectively configured in a mesh form and provided on both sides of the filtering member.

### DISCLOSURE

### Technical Problem

The present disclosure is designed to solve the problems of the related art, and therefore the present disclosure is directed to providing a battery module with an improved structure to secure safety in various aspects, and a battery pack and a vehicle including the battery module.

However, the technical problem to be solved by the present disclosure is not limited to the above, and other problems not mentioned herein will be clearly understood by those skilled in the art from the following disclosure.

### Technical Solution

In one aspect of the present disclosure, there is provided a battery module, comprising: a cell assembly including at least one battery cell; a module case configured to accommodate the cell assembly in an inner space thereof and having a venting hole formed to discharge a gas in the inner space to the outside; a filtering member provided in the venting hole of the module case and configured to filter foreign matter from flowing into the inner space from the outer space through the venting hole; and a plurality of mesh members respectively configured in a mesh form and provided on both sides of the filtering member.

Here, in the cell assembly, a plurality of pouch-type secondary batteries may be stacked in a left and right direction in a state of being erected, and the venting hole may be formed in at least one of a front side and a rear side of the module case.

In addition, the module case may have a concave mounting groove formed around the venting hole so that the mesh member is inserted and mounted therein.

In addition, the venting hole may be formed in plurality.

In addition, the mounting groove may be formed long in a horizontal direction.

In addition, the filtering member may be at least partially inserted into the venting hole.

In addition, the module case may include a stopper configured to prevent at least a part of the mesh member provided outside the filtering member from moving in an outer direction.

In addition, at least two of the plurality of mesh members may have mesh holes of different sizes.

In addition, at least some of the plurality of mesh members may have an acicular body formed to protrude in an inner or outer direction.

In addition, the module case may include a lower frame having a top opening and an upper cover coupled to the top opening of the lower frame, and the upper cover may be welded to at least a part of the lower frame.

In addition, the upper cover may have a blocking protrusion formed on the coupling portion with the lower frame to protrude in a lower direction.

In addition, the upper cover may have a sealing material configured to surround the blocking protrusion.

In another aspect of the present disclosure, there is also provided a battery pack, comprising the battery module according to the present disclosure.

In still another aspect of the present disclosure, there is also provided a vehicle, comprising the battery module according to the present disclosure.

### Advantageous Effects

According to one aspect of the present disclosure, when a venting gas is generated inside the battery module due to a thermal event or the like, the venting gas may be quickly discharged to the outside of the module.

Therefore, according to this aspect of the present disclosure, damage or explosion of the battery module due to venting gas may be prevented.

In addition, according to one aspect of the present disclosure, when spark, flame or the like is generated inside the module, it is possible to prevent a fire from occurring outside the battery module by suppressing external discharge of the flame or the like.

In particular, according to this embodiment, the propagation of thermal runaway between battery modules may be suppressed.

In addition, according to one aspect of the present disclosure, waterproof or dustproof performance may be stably secured.

In particular, according to this embodiment of the present disclosure, the inflow of external foreign substances such as moisture or dust into the inside through the gas discharge structure may be stably and effectively prevented in a normal state.

In addition, according to one aspect of the present disclosure, it is possible to effectively prevent oxygen from entering from the outside.

Therefore, according to this aspect of the present disclosure, it is possible to prevent a fire from occurring, spreading or amplifying inside the battery module.

The present disclosure may have various other effects in addition to the above, and such effects will be described in each embodiment, or any effect that can be easily inferred by those skilled in the art will not be described in detail.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a perspective view schematically showing a battery module according to an embodiment of the present disclosure.
FIG. 2 is an exploded perspective view showing some components of the battery module of FIG. 1.
FIG. 3 is a cross-sectional view schematically showing a portion of the battery module according to an embodiment of the present disclosure.
FIG. 4 is an exploded perspective view schematically showing some components of the battery module according to an embodiment of the present disclosure.
FIG. 5 is an enlarged cross-sectional view schematically showing a portion of the battery module according to an embodiment of the present disclosure in which a venting hole is formed.
FIGS. 6 and 7 are cross-sectional views schematically showing some components of battery modules according to different embodiments of the present disclosure.
FIG. 8 is a perspective view schematically showing some components of a battery module according to still another embodiment of the present disclosure.
FIG. 9 is a cross-sectional view showing some components of a battery module according to still another embodiment of the present disclosure.
FIG. 10 is a partial cross-sectional view showing a battery module according to still another embodiment of the present disclosure, viewed from the above.
FIG. 11 is a cross-sectional view schematically showing some components of a battery module according to still another embodiment of the present disclosure.
FIG. 12 is a cross-sectional view schematically showing some components of a battery module according to still another embodiment of the present disclosure.
FIG. 13 is a cross-sectional view schematically showing some components of a battery module according to an embodiment of the present disclosure.
FIG. 14 is an enlarged view showing a portion A5 in FIG. 13.
FIG. 15 is a cross-sectional view schematically showing some components of a battery module according to another embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

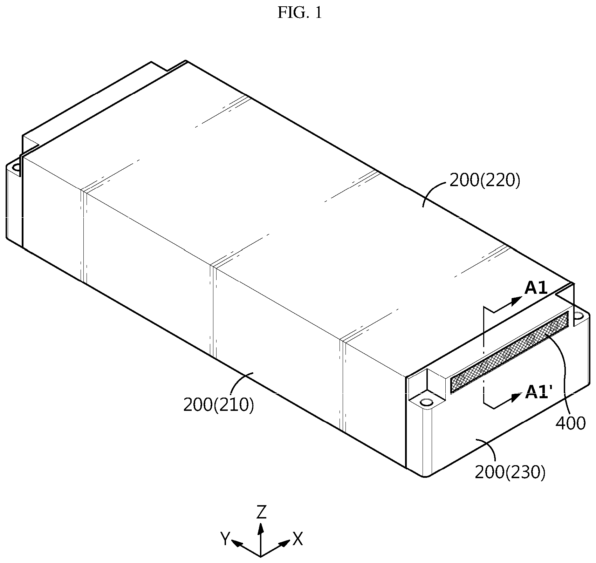

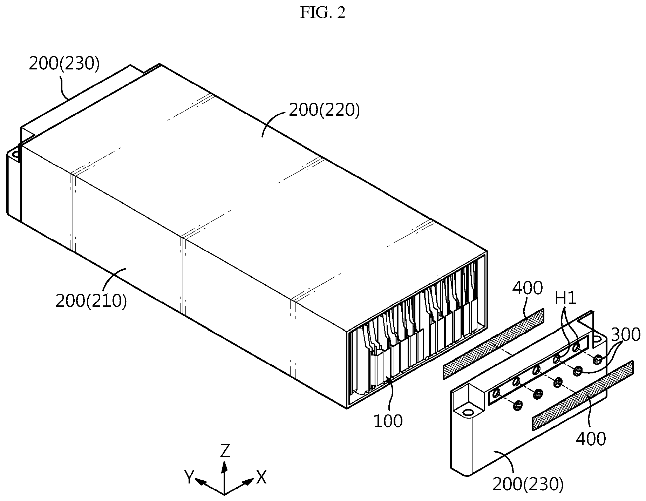

FIG. 1 is a perspective view schematically showing a battery module according to an embodiment of the present disclosure, and FIG. 2 is an exploded perspective view showing some components of the battery module of FIG. 1.

Referring to FIGS. 1 and 2, the battery module according to the present disclosure includes a cell assembly 100, a module case 200, a filtering member 300, and a mesh member 400.

The cell assembly 100 may include at least one battery cell. Here, the battery cell may refer to a secondary battery. A secondary battery may include an electrode assembly, an electrolyte, and a battery case. In particular, the battery cell included in the cell assembly 100 may be a pouch-type secondary battery. However, other types of secondary batteries, such as cylindrical batteries or prismatic batteries, may also be employed in the cell assembly 100 of the present disclosure.

The module case 200 may be configured to have an empty space formed therein so that the cell assembly 100 is accommodated in the inner space. For example, the module case 200 may be configured in a rectangular parallelepiped shape having six plates. Also, the cell assembly 100 may be accommodated in the inner space of the rectangular parallelepiped. At this time, at least some of the plates constituting the module case 200 may be integrated with each other. Alternatively, the six plates may be manufactured separately and then coupled to each other through welding or bolting. The module case 200 may be made of a metal material such as aluminum. However, the present disclosure is not limited to the specific material of the module case 200.

Also, as indicated by H1 in FIG. 2, a venting hole may be formed in the module case 200. The venting hole H1 may be configured to discharge a gas in the inner space of the module case 200 to the outside. That is, the venting hole H1 may be configured to penetrate the module case 200 in an inner and outer direction. In particular, when a thermal runaway phenomenon occurs in some battery cells in the cell assembly 100 accommodated in the inner space of the module case 200, a venting gas may be discharged into the inner space of the module case 200. At this time, the venting hole H1 may be configured to discharge the venting gas filled in the inner space of the module case 200 to the outside of the module case 200.

The venting hole H1 may be formed in a circular shape, but the present disclosure is not necessarily limited to the shape of the venting hole H1.

Meanwhile, in this specification, unless otherwise specified, the inner direction may refer to a direction toward the center of the battery module, and the outer direction may refer to a direction opposite thereto.

The filtering member 300 may be provided in the venting hole H1 of the module case 200. Also, the filtering member 300 may be configured to filter foreign matter not to flow into the inner space of the module case 200 from the outer space of the module case 200 through the venting hole H1. Moreover, the filtering member 300 may be configured to allow an air or venting gas to pass through, but not to allow other foreign matters to pass.

In particular, the filtering member 300 may be configured to block moisture, humidity, or dust of a certain level or more as foreign matter. The venting hole H1 may be configured to penetrate the inside and outside of the module case 200, and as the filtering member 300 blocks the venting hole H1, it is possible to block the inflow of moisture or dust outside the battery module into the module case 200 through the venting hole H1. As the filtering member 300, various waterproof or dustproof filters known at the time of filing of this application may be employed. In addition, the filtering member 300 may include various materials capable of blocking moisture or dust. For example, the filtering member 300 may include fibers, ceramic materials, or naphthalene.

The mesh member 400 may be configured in a mesh form. Here, the mesh form may have a substantially plate-like shape and may be configured with a plurality of mesh holes formed therein. For example, the mesh member 400 may be formed such that a plurality of wires are woven like a mesh. Alternatively, the mesh member 400 may have a plurality of mesh holes punched in a plate. In particular, the mesh member 400 may be configured to allow a gas to pass through the mesh hole, but not to allow flame or spark to pass.

Also, the mesh member 400 may be made of a metal material. For example, the mesh member 400 may be configured such that a plurality of metal wires are woven. In particular, the mesh member 400 is made of a metal material such as SUS (Stainless Steel) to prevent corrosion due to moisture. In addition, the mesh member 400 may be configured in various other shapes or made of various other materials.

The mesh member 400 may be provided in plurality. In particular, the mesh members 400 may be provided on both sides of the filtering member 300. That is, at least two or more mesh members 400 may be provided, respectively, on the inner side of the filtering member 300 and the outer side of the filtering member 300, based on the filtering member 300. In this case, the filtering member 300 may be regarded as being located between the multiple mesh members 400.

Moreover, when two or more filtering members 300 are provided, a plurality of mesh members 400 may be provided for each filtering member 300. For example, two mesh members 400 may be positioned on both sides of each filtering member 300.

According to this embodiment of the present disclosure, the safety of the battery module may be improved in various aspects.

First, in this embodiment, since at least one venting hole H1 is formed in the module case 200, when a venting gas is generated inside the battery module due to thermal runaway, the venting gas may be quickly discharged to the outside of the battery module. Therefore, it is possible to prevent explosion or damage of the battery module due to an increase in internal pressure of the battery module. Also, according to this embodiment, the venting gas may be discharged in an intended direction through the venting hole H1. Therefore, it is possible to prevent fire or thermal runaway propagation from occurring outside the battery module by the venting gas directed in an unintended direction.

Also, in this embodiment, the battery module may secure IP (Ingress Protection) performance to a certain level or higher by the filtering member 300. In particular, even if foreign matter such as moisture, humidity or dust exists outside the battery module in a normal state where there is no problem with the battery module, such foreign matter may be blocked from flowing into the battery module by the filtering member 300. For example, in the case of a battery module mounted in a vehicle, when it rains or water splashes on the road while driving, there may be a risk of water inflow into the module case 200 through the venting hole H1. However, according to this embodiment, the filtering member 300 may prevent water from entering through the venting hole H1.

In addition, in this embodiment, the battery module may stably secure blocking performance against discharge of flame or the like by means of the multiple mesh members 400. In particular, in an abnormal state where a thermal event such as thermal runaway occurs inside the battery module, a flame, spark, high-temperature active material particles, or the like may be ejected along with the venting gas. Such ignition triggers (hereinafter, flame or the like) may be suppressed from being discharged from the inside of the module case 200 to the outside. In particular, in this embodiment of the present disclosure, the mesh member 400 may be provided in plurality in the venting hole H1. Therefore, the flame or the like may be more effectively suppressed by the multiple mesh members 400.

Moreover, in this embodiment, since the filtering member 300 is interposed between the multiple mesh members 400, the position of the filtering member 300 may be stably maintained. For example, a gas or the like may flow in and out through the venting hole H1 between the outside and the inside of the battery module, and at this time, the filtering member 300 may be stably positioned without being separated from the venting hole H1 even under pressure according to the gas flow. Also, according to this embodiment of the present disclosure, a structure or process for fixing the filtering member 300 to the venting hole H1 may be omitted or reduced.

In particular, the filtering member 300 is provided to secure performance such as waterproof or dustproof in a normal state, and may be weak against flame or high temperature. For example, the filtering member 300 may have a size equal to or greater than that of the venting hole H1 in a normal state, but may have a size smaller than that of the venting hole H1 in a high temperature situation because its volume is reduced or at least partially lost. Therefore, when a high-temperature venting gas or flame is generated inside the battery module, the fixing force for the filtering member 300 may be weakened or lost. Moreover, the filtering member 300 may be burned by high-temperature venting gas or flame, and if the high-temperature venting gas or flame is discharged to the outside of the battery module during combustion, it may cause a fire in other components outside the battery module, such as other battery modules or BMS (Battery Management System).

However, according to this embodiment, even if the volume or shape of the filtering member 300 is deformed, the filtering member 300 may be positioned in the venting hole H1 as it is by the mesh members 400 located on both sides. Moreover, according to this embodiment, by preventing the filtering member 300 from being discharged to the outside of the battery module during combustion, the problem that the filtering member 300 acts as an ignition trigger outside the battery module may be prevented.

The mesh member 400 may be configured to be larger than the size of the venting hole H1. In this case, the mesh member 400 may be fixed to the module case 200 through a portion larger than the venting hole H1. For example, the mesh member 400 may be coupled to the module case 200 by applying an adhesive to a portion not facing the venting hole H1 or by providing a hook or bolting component thereto. Also, in this case, even when a gas flows in and out through the venting hole H1, it is possible to prevent the mesh member 400 from being sucked into the venting hole H1 by the pressure of the gas.

As shown in FIG. 2, the cell assembly 100 may include a plurality of pouch-type secondary batteries. In this case, the plurality of pouch-type secondary batteries may be configured to be stacked in a horizontal direction, for example in a left and right direction (X-axis direction) in a state of being erected in a vertical direction (upper and lower direction, Z-axis direction). That is, the pouch-type secondary batteries may be stacked so that the wide surfaces of the accommodating portions thereof face each other in a state of being erected such that the wide surfaces of the accommodating portions accommodating the electrode assemblies face in the left and right direction. At this time, each battery cell may include electrode leads, and the electrode leads may be located at both ends or at one end of each battery cell. A secondary battery in which electrode leads protrude in both directions may refer to a bidirectional cell, and a secondary battery in which electrode leads protrude in one direction may refer to a unidirectional cell. The present disclosure is not limited by the specific type or form of the secondary battery, and various types of secondary batteries known at the time of filing of this application may be employed in the cell assembly 100 of the present disclosure.

In this embodiment, the venting hole H1 may be formed in at least one of the front side and the rear side of the module case 200.

For example, seeing the embodiment of FIG. 2, the venting hole H1 may be formed in the front side of the module case 200. In addition, the venting hole H1 may be located at the upper side based on the central portion in the vertical direction of the module case 200. For example, the venting hole H1 may be formed at the top of the front side of the module case 200.

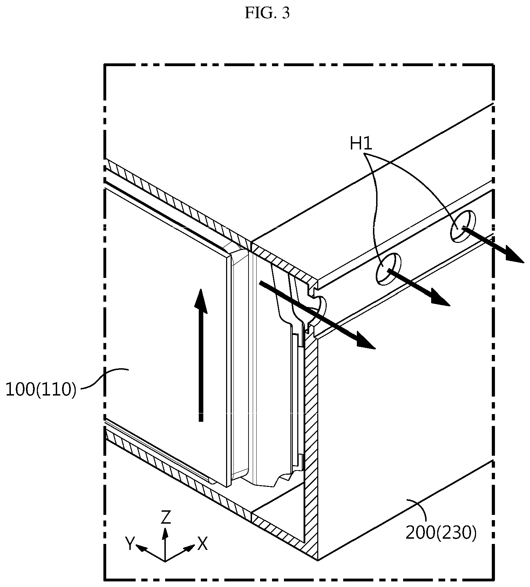

In this embodiment, the venting gas may be discharged to the outside through the venting hole H1 formed in the front upper side of the module case 200. This gas discharging configuration is shown in FIG. 3.

FIG. 3 is a cross-sectional view schematically showing a portion of the battery module according to an embodiment of the present disclosure.

Referring to FIG. 3, when a venting gas is generated inside the battery module, a configuration in which the venting gas is discharged to the outside through the venting hole H1 is shown. In particular, when the venting gas is ejected from any one battery cell 110 included in the cell assembly 100, the venting gas inside the module case 200 may move upward as indicated by an arrow due to its high temperature. In addition, there is a high possibility that the gas inside the battery cell 110 moves upward and is discharged through the sealing portion located on the upper side. Accordingly, the venting gas may be ejected toward the upper side of the battery cell 110. Also, the venting gas that moves to the upper side or is discharged to the upper side in this way inside the module case 200 may move in a substantially horizontal direction, namely in a front direction, and be discharged to the outside through the venting hole H1.

According to this embodiment, inside the module case 200, the venting gas may be discharged more quickly and smoothly. Moreover, in the inner space of the module case 200, if the electrode leads of each battery cell are located on the front side, a wider space may exist on the front side than other parts. Accordingly, the venting gas tends to be directed toward the front side of the cell assembly 100. Therefore, as in this embodiment, when the venting hole H1 is located in the front side of the cell assembly 100, the venting gas may be more smoothly and quickly discharged.

Meanwhile, in the embodiment of FIG. 2, the venting hole H1 may also be formed in the rear side of the module case 200. That is, the venting hole H1 may be formed in both the front and rear sides of the module case 200. In particular, when electrode leads are located on both the front and rear sides of each battery cell in the cell assembly 100, it is preferable that the venting hole H1 is formed in both the front and rear sides. In this case, the venting gas located inside the module case 200, particularly at the upper side, may be discharged to both the front and rear sides of the module case 200. Therefore, in this case, the venting gas may be discharged more rapidly. Moreover, the venting gas may be generated and ejected at any of the front and rear sides of the cell assembly 100. Therefore, according to this embodiment, even if the venting gas is ejected at the front side or the rear side of the cell assembly 100, the venting gas may be discharged more rapidly.

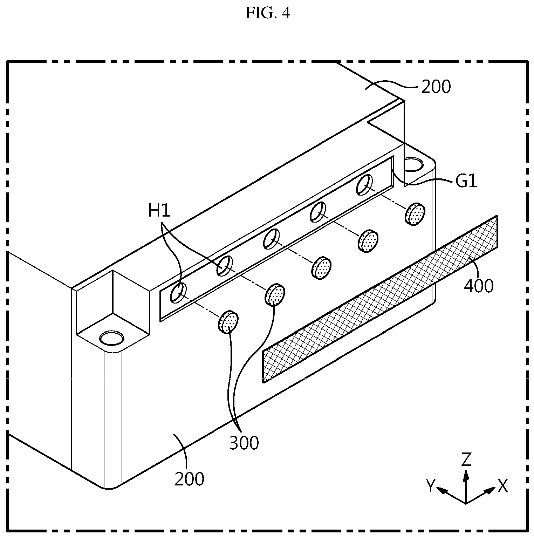

The module case 200 may have a mounting groove formed to enable mounting of the mesh member 400. This will be described in more detail with further reference to FIG. 4.

FIG. 4 is an exploded perspective view schematically showing some components of the battery module according to an embodiment of the present disclosure.

Referring to FIG. 4, a mounting groove may be formed in the module case 200 as indicated by G1. In particular, the mounting groove G1 may be located around the portion where the venting hole H1 is formed in the module case 200. That is, the mounting groove G1 may be formed to have a larger size than the venting hole H1.

The mounting groove G1 may be configured such that the mesh member 400 may be inserted and mounted therein. For example, the mounting groove G1 may be formed on the outer surface of the module case 200 as shown in FIG. 4. At this time, the mounting groove G1 may be formed in a concave shape in an inner direction (+Y-axis direction). Also, the mesh member 400 positioned at the outer side of the filtering member 300 may be inserted and mounted in the outer mounting groove G1. In addition, the mounting groove G1 may also be formed on the inner surface of the module case 200, and in this case, the mounting groove G1 may be formed in a concave shape in an outer direction (-Y-axis direction) on the inner surface of the module case 200. Also, the mesh member 400 located on the inner side of the filtering member 300 may be inserted and mounted in the inner mounting groove.

According to this embodiment of the present disclosure, the coupling force between the mesh member 400 and the module case 200 may be improved by the mounting groove G1. In particular, according to this embodiment, the mesh member 400 may be supported upward by the mounting groove G1. Moreover, when the size of the mounting groove G1 is similar to that of the mesh member 400, the mesh member 400 may be fitted into the mounting groove G1. Also, according to this embodiment, the assembling property of the mesh member 400 may be improved by the mounting groove G1. In particular, since the mounting position of the mesh member 400 is limited to the mounting groove G1, the process of assembling the mesh member 400 may be easily guided. Also, in this embodiment, an adhesive may be applied to the mounting groove G1 so that the mesh member 400 is stably coupled to the mounting groove G1.

The venting hole H1 may be formed in plurality in one battery module. Moreover, the venting hole H1 may be formed in plurality on one side of the battery module. For example, as shown in FIG. 4, a plurality of venting holes H1 may be formed on the front side of the battery module.

The plurality of venting holes H1 may be formed in a horizontal direction. In particular, the plurality of venting holes H1 may be arranged in the stacking direction of the cell assembly 100. For example, in the configuration of FIG. 4, the plurality of battery cells 110 may be stacked in the left and right direction (X-axis direction), and the plurality of venting holes H1 may be formed to be spaced apart from each other by a predetermined distance in the left and right direction. As a more specific example, the number of venting holes H1 formed on the front side of the battery module may be equal to or greater than the number of battery cells 110 included in the cell assembly 100.

According to this embodiment of the present disclosure, the venting gas ejected from the cell assembly 100 may be more quickly and smoothly discharged to the outside of the module case 200. Moreover, the venting hole H1 may be formed on various sides of the battery module, for example on both the front side and the rear side. In this case, the discharge performance of the venting gas through the venting hole H1 may be further increased.

When a plurality of venting holes H1 are formed in the module case 200, the filtering member 300 may be separately provided in each venting hole H1. In this case, it may be regarded that the filtering member 300 is provided in plurality in one battery module.

The plurality of venting holes H1 may be configured such that at least two venting holes H1 have different sizes. For example, the plurality of venting holes H1 may be formed in the left and right direction, and the size of the venting holes H1 located in the central portion may be larger than the size of the venting holes H1 located on the left and right outer sides. In particular, the plurality of venting holes H1 formed in the horizontal direction may be configured such that the hole size increases toward the central portion.

According to this embodiment of the present disclosure, it is possible to guide more venting gas to be discharged at a specific location, for example in the central portion. Also, inside the battery module, the venting gas is likely to be located in a larger amount in the central portion than in the left and right sides. Therefore, if the size of the venting hole H1 in the central portion is increased as in this embodiment, even if a lot of venting gas is gathered in the central portion, the gas may be discharged more rapidly and smoothly.

In the above embodiment, the mounting groove G1 may be formed long in the horizontal direction. For example, as shown in FIG. 4, the mounting groove G1 may be formed to be elongated in the left and right direction (X-axis direction). Also, the mesh member 400 may be formed to be elongated in the horizontal direction (left and right direction) corresponding to the shape of the mounting groove G1.

In particular, the mounting groove G1 may be configured to cover the plurality of venting holes H1 formed on one side of the battery module. For example, if five venting holes H1 are arranged in the left and right direction on the front side of the battery module, the mounting groove G1 may be formed long in the left and right direction so that all of the five venting holes H1 are located inside. That is, all of the five venting holes H1 formed on the upper part of the front side of the module case 200 may be formed in one mounting groove G1.

According to this embodiment of the present disclosure, the plurality of venting holes H1 may be covered with a small number of mesh members 400. Therefore, the assembling property or productivity for the battery module may be further improved. In addition, according to this embodiment, by increasing the coupling area between the mesh member 400 and the mounting groove G1, the coupling property or fixing force of the mesh member 400 may be improved.

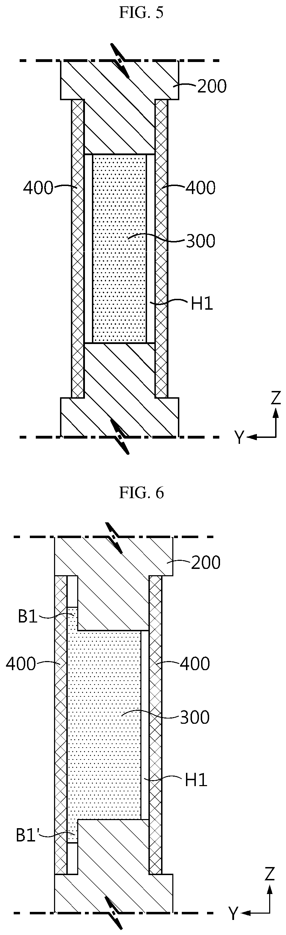

The filtering member 300 may be configured such that at least a part thereof is inserted into the venting hole H1. This will be described in more detail with further reference to FIG. 5.

FIG. 5 is an enlarged cross-sectional view schematically showing a portion of the battery module according to an embodiment of the present disclosure in which a venting hole H1 is formed. For example, FIG. 5 may be regarded as showing an example of a cross-sectional configuration taken along line A1-A1' in FIG. 1.

Referring to FIG. 5, a venting hole H1 penetrating in the inner and outer direction (Z-axis direction) is formed in the module case 200, and the filtering member 300 may be mounted in a state where its entire portion is inserted into the venting hole H1. In this case, the filtering member 300 may be configured to correspond to the shape or size of the venting hole H1. For example, when the venting hole H1 is formed in a circular shape, the filtering member 300 may be formed in a circular shape and have an outer diameter conforming to the inner diameter of the venting hole H1. In this configuration, the mesh member 400 may be provided on the inner side and the outer side of the filtering member 300, respectively.

According to this embodiment of the present disclosure, the space occupied by the filtering member 300 inside or outside the battery module or the coupling structure for mounting the filtering member 300 may be eliminated or reduced. In addition, in this case, the configuration for mounting the mesh member 400 in the mounting groove G1 may also be more easily implemented without being disturbed by the filtering member 300.

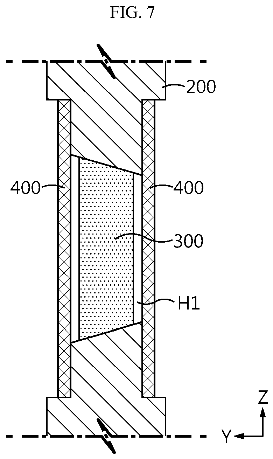

FIGS. 6 and 7 are cross-sectional views schematically showing some components of battery modules according to different embodiments of the present disclosure. For each embodiment included in this specification, including these embodiments, features that can be applied identically or similarly to other embodiments will not be described in detail, and features different therefrom will be described in detail.

First, referring to FIG. 6, the filtering member 300 may be configured to be partially inserted into the venting hole H1. That is, a part of the filtering member 300 may be inserted into the venting hole H1, and another part may not be inserted into the venting hole H1. In particular, as indicated by B1 and B1' in FIG. 6, a part of the filtering member 300 may be formed larger than the size of the venting hole H1 and positioned outside the venting hole H1 without being inserted into the venting hole H1. In particular, a part of the filtering member 300 formed larger than the venting hole H1 may be configured to be located at the inner side (side in the +Y-axis direction of the drawing) based on the venting hole H1. That is, the large-size parts of the filtering member 300 exposed to the outside as indicated by B1 and B1' in FIG. 6 may be located on the inner side of the module case 200.

According to this embodiment of the present disclosure, in a situation where gas flows in and out through the venting hole H1, the filtering member 300 may be positioned more stably in the venting hole H1. In particular, when the venting gas is discharged to the outside through the venting hole H1 due to the occurrence of a thermal event, the filtering member 300 may receive a strong pressure in an outer direction due to the pressure of the venting gas. However, in the configuration as shown in FIG. 6, it is possible to more effectively suppress the filtering member 300 from being discharged to the outside of the venting hole H1.

Next, referring to FIG. 7, the venting hole H1 may include parts having different sizes from the inner side to the outer direction. In addition, the filtering member 300 may include parts having different sizes from the inner side to the outer direction to correspond to the shape of the venting hole H1. In particular, when the venting hole H1 is formed in a circular shape, the inner diameter of the venting hole H1 may gradually decrease from the inner side to the outer direction. In addition, the filtering member 300 may be configured such that the outer diameter gradually decreases from the inner side to the outer direction.

According to this embodiment of the present disclosure, movement of the filtering member 300 may be suppressed when gas is discharged as in the former embodiment of FIG. 6. Moreover, according to the embodiment of FIG. 7, since the filtering member 300 may be located only inside the venting hole H1 as a whole, it may be more advantageous to reduce the volume of the battery module, improve energy density, or simplify the structure.

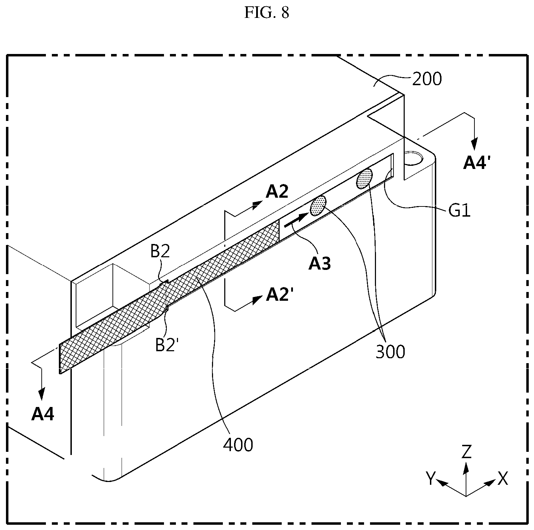

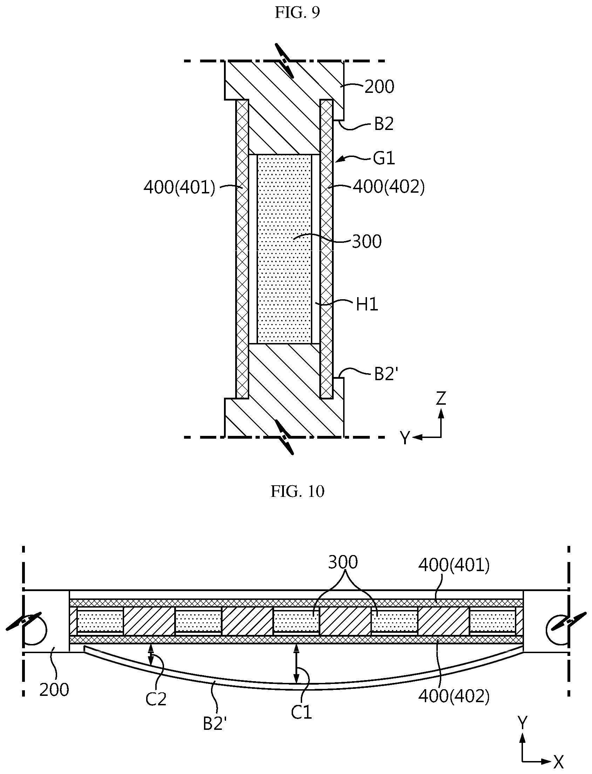

FIG. 8 is a perspective view schematically showing some components of a battery module according to still another embodiment of the present disclosure. Also, FIG. 9 is a cross-sectional view showing some components of a battery module according to still another embodiment of the present disclosure. For example, FIG. 9 may be regarded as showing an example of a cross-sectional configuration taken along line A2-A2' in FIG. 8. Referring to FIGS. 8 and 9, the module case 200 may include a stopper as indicated by B2 and B2'. In particular, the stopper B2, B2' may be configured to prevent at least a part of the mesh member 400 provided outside the filtering member 300 from moving in an outer direction.

For example, in the configuration of FIG. 9, based on the filtering member 300, the +Y-axis direction may be referred to as an inner direction and the -Y-axis direction may be referred to as an outer direction. In this case, the mesh member 400 located inside the filtering member 300 may be referred to as an inner mesh 401, and the mesh member 400 located outside the filtering member 300 may be referred to as an outer mesh 402. Here, the module case 200 may include a stopper as indicated by B2 and/or B2' at the top and/or bottom of the portion where the outer mesh 402 is mounted. In particular, the top stopper indicated by B2 may be configured to be extended and bent downward from the outer top of the outer mesh 402 so as to cover the outer top of the outer mesh 402. In addition, the lower stopper indicated by B2' may be configured to be extended and bent upward from the outer bottom of the outer mesh 402 so as to cover the outer bottom of the outer mesh 402.

According to this configuration of the present disclosure, the mesh member 400 may be more stably fixed to the module case 200, particularly in the mounting groove G1 of the module case 200. Moreover, when the venting gas is discharged to the outside through the venting hole H1, the outer mesh 402 may receive a force moving in an outward direction. However, in this embodiment, the outer mesh 402 may be prevented from being separated from the module case 200 by blocking the movement of the outer mesh 402 in an outward direction by the stopper B2, B2'. Therefore, the effect of the outer mesh 402, particularly the flame blocking effect, may be sustained.

The stopper B2, B2' may be formed to be elongated in a horizontal direction. In particular, in the module case 200, the plurality of venting holes H1 may be arranged in the left and right direction (X-axis direction), and the mounting groove G1 in which the mesh member 400 is seated may also be formed to be elongated in the left and right direction. At this time, the stopper B2, B2' may be elongated in the left and right direction according to the shape of the mounting groove G1. Moreover, as shown in FIGS. 8 and 9, the stoppers B2, B2' may be formed on the top and bottom of the mounting groove G1, respectively, and both the top stopper B2 and the bottom stopper B2' may be formed to be elongated from the left end of the mounting groove G1 to the right end.

According to this embodiment of the present disclosure, the fixing force of the mesh member 400 may be further increased. Also, in this case, the assembling property of the mesh member 400 may be improved. In particular, according to this embodiment, the mesh member 400 (outer mesh 402) may be slidably coupled to the outer surface of the module case 200. For example, as indicated by the arrow A3 in FIG. 8, the mesh member 400 may be inserted into the mounting groove G1 and the left end of the stopper B2, B2', and then slidably coupled to the module case 200 in the form of moving to the right. At this time, the stopper B2, B2' may guide the sliding coupling of the mesh member 400.

In this way, the module case 200, particularly the mounting groove G1 and the stopper B2, B2', may be configured such that the mesh member 400 may be slidably coupled to the mounting groove G1. In this case, both the fixing property and assembling property of the mesh member 400 may be improved.

FIG. 10 is a partial cross-sectional view showing a battery module according to still another embodiment of the present disclosure, viewed from the above. For example, FIG. 10 may be regarded as showing a modification of a cross-sectional configuration taken along line A4-A4' in FIG. 8.

Referring to FIG. 10, a stopper is formed as indicated by B2' at a portion where the outer mesh 402 is mounted, but at least a part of the stopper may be configured to be spaced apart from the outer mesh 402 by a predetermined distance in the horizontal direction (Y-axis direction). In particular, the stopper B2' is formed to be elongated in the left and right direction (X-axis direction), but the distance from the stopper B2' to the outer mesh 402 may be partially different. Moreover, as shown in FIG. 10, the central portion of the stopper B2' in the left and right direction may be configured to be more spaced apart from the outer mesh 402 than the left and right ends of the stopper B2'. For example, regarding the distance between the stopper B2' and the outer mesh 402, assuming that the distance of the central portion is C1 and the distance of the left portion is C2, the stopper B2' may be configured such that the relationship C1>C2 is established. In particular, the stopper B2' may be formed in an arch shape protruding more outward from the left and right ends toward the central portion.

According to this embodiment of the present disclosure, due to the separation space between the stopper B2' and the mesh member 400, the pressing force of the venting gas applied to the mesh member 400 may be more alleviated. In particular, a lot of venting gas may be discharged in the central portion, and when the separation distance of the central portion is configured to be longer as in this embodiment, the central portion of the outer mesh 402 may move relatively much to the outer side where the stopper B2' is located. Therefore, in this case, it is possible to prevent a relatively large force from being applied to the central portion of the outer mesh 402, thereby lowering the possibility of damage or breakage of the outer mesh 402 or the stopper B2'.

In addition, according to this embodiment, when the venting gas is discharged, the outer mesh 402 may also have an arch shape in which the central portion protrudes outward by the stopper B2'. In this case, by radially forming the flow direction of the venting gas discharged through the outer mesh 402, the venting gas may be dispersed in a wider direction.

Also, among the plurality of mesh members 400, at least two mesh members 400 may have mesh holes of different sizes.

For example, as described above, the mesh member 400 may include an inner mesh 401 located inside the filtering member 300 and an outer mesh 402 located outside the filtering member 300. In this case, the inner mesh 401 and the outer mesh 402 may have different mesh hole sizes.

In particular, the size of the mesh hole in the inner mesh 401 may be greater than that of the outer mesh 402. According to this embodiment, when the venting gas is discharged, particles of a relatively large size may be filtered through the inner mesh 401 and particles of a relatively small size may be filtered through the outer mesh 402. Therefore, the particles discharged together with the venting gas may be filtered in a dispersed form according to their sizes by the inner mesh 401 and the outer mesh 402. Therefore, the particle emission blocking effect may be improved by the multiple meshes, and the problem of many particles being caught only in the inner mesh 401 may be prevented.

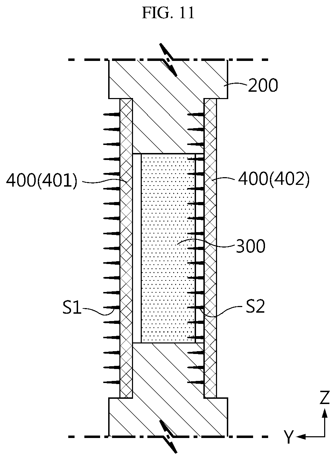

FIG. 11 is a cross-sectional view schematically showing some components of a battery module according to still another embodiment of the present disclosure. For example, FIG. 11 may be regarded as showing another example of a cross-sectional configuration taken along line A2-A2' in FIG. 8.

Referring to FIG. 11, at least some of the plurality of mesh members 400 may have an acicular body. The acicular body may be formed to protrude in an inner or outer direction. More specifically, in the embodiment of FIG. 11, the inner mesh 401 and the outer mesh 402 may have an acicular body in the form of sharply protruding in the inner direction (+Y-axis direction), as indicated by S1 and S2.

According to this embodiment of the present disclosure, when the venting gas passes through the inner mesh 401 and/or the outer mesh 402, active material particles or the like included in the venting gas are caught by the acicular bodies S1, S2, so that the active material particles or the like may be suppressed more reliably from passing through the mesh member 400.

Moreover, at least one acicular body of the mesh member 400, for example the acicular body S2 of the outer mesh 402, may be inserted into the filtering member 300. In this case, the position of the filtering member 300 may be more strongly fixed by the acicular body S2 of the mesh member 400. Also, in this case, the shape of the filtering member 300 may be maintained more stably even when the venting gas is discharged.

Meanwhile, in the embodiment of FIG. 11, both the inner mesh 401 and the outer mesh 402 have acicular bodies facing inward, but some of them may have acicular bodies facing outward. For example, the inner mesh 401 may have an acicular body S1 that protrudes sharply in an outer direction toward the filtering member 300. In this case, the acicular body S1 of the inner mesh 401 may be inserted into the filtering member 300. Also, according to this embodiment, the position or shape of the filtering member 300 may be more stably maintained or fixed when gas flows in and out.

Also, the acicular body of the mesh member 400 may be inserted into the module case 200. For example, as in the embodiment of FIG. 11, a part of the acicular body S2 formed in the outer mesh 402 may be inserted into the outer surface of the module case 200. In this case, the coupling force between the mesh member 400 and the module case 200 may be further improved. In particular, even when the venting gas is discharged, the mesh member 400 may be further prevented from being separated.

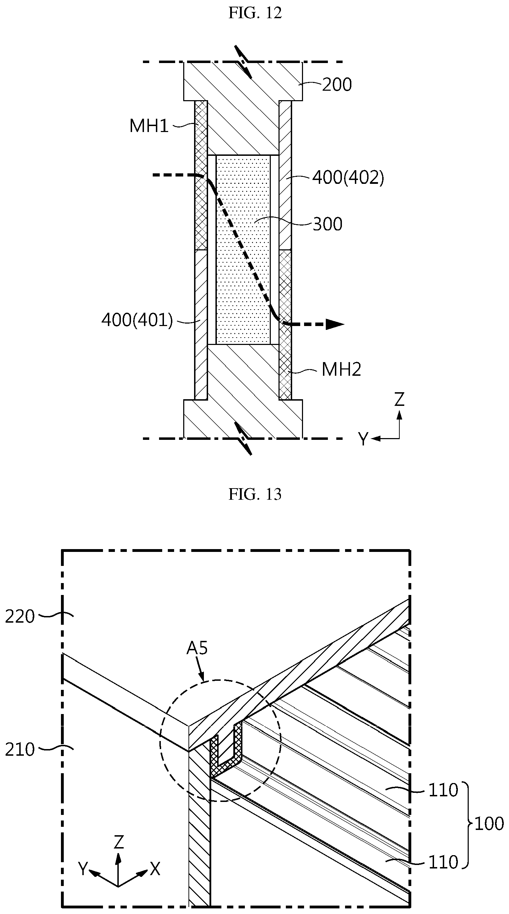

At least two of the plurality of mesh members 400 may be configured such that mesh holes thereof are located to intersect each other at different locations. This will be described in more detail with reference to FIG. 12.

FIG. 12 is a cross-sectional view schematically showing some components of a battery module according to still another embodiment of the present disclosure. For example, FIG. 12 may be regarded as showing still another example of a cross-sectional configuration taken along line A2-A2' in FIG. 8.

Referring to FIG. 12, in the inner mesh 401 and the outer mesh 402, mesh holes may be formed at different positions in the upper and lower direction (Z-axis direction). In particular, the inner mesh 401 may be configured in a plate form in which a mesh hole MH1 is formed at the upper side and no mesh hole is formed at the lower side. In addition, the outer mesh 402 may be configured in a plate form in which a mesh hole MH2 is formed at the lower side and no mesh hole is formed at the upper side.

According to this embodiment of the present disclosure, the venting gas passing through the mesh hole MH1 of the inner mesh 401 and the mesh hole MH2 of the outer mesh 402 may flow such that at least a part thereof is bent, as indicated by the arrow in FIG. 12. In this case, since the flame, spark or the like that is included in the venting gas and flows along with the venting gas has a strong linearity, the effect of blocking external discharge of the flame, spark or the like may be further improved.

Moreover, when the position of the mesh hole MH2 of the outer mesh 402 is lower than the position of the mesh hole MH1 of the inner mesh 401 as in this embodiment, the effect of blocking external discharge of the flame or the like may be further improved. That is, if the discharge passage is configured to be lowered from the inner side of the venting hole H1 toward the outer direction as in this embodiment, the height of the venting gas may be lowered while being discharged to the outside. At this time, since the flame, spark or the like is easily directed upward due to its characteristics, it may be more difficult that the flame, spark or the like is discharged to the outside through the inner mesh 401 and the outer mesh 402.

Meanwhile, the configuration of making the flow of the venting gas passing through the inner mesh 401 and the outer mesh 402 in a bent form rather than a straight line by changing the configuration or arrangement of the mesh holes may be implemented in various other ways. For example, the mesh holes formed in the inner mesh 401 and the outer mesh 402 may be differently positioned in the left and right direction. Alternatively, the flow of the venting gas passing through the inner mesh 401 and the outer mesh 402 may be bent by making the mesh holes MH1 formed in the inner mesh 401 and the mesh holes MH2 formed in the outer mesh 402 have different shapes from each other.

The module case 200 may include a lower frame 210 and an upper cover 220 as shown in FIGS. 1 and 2. Here, the lower frame 210 is configured to have a top opening, and the upper cover 220 may be coupled to the top opening of the lower frame 210. For example, the lower frame 210 may be configured in the form of a U-frame having a bottom portion and a side portion. At this time, the U-frame may be referred to as a frame having a U-shape in which a bottom portion and two side portions are integrally manufactured.

In this configuration, the upper cover 220 may be welded to at least a part of the lower frame 210. For example, when the lower frame 210 is configured in a U-frame shape, left and right ends of the upper cover 220 may be welded to side tops of the lower frame 210.

Meanwhile, when the lower frame 210 is configured in the form of a U-frame, the end frame 230 may be coupled to the openings at the front and rear sides. In this case, the front and rear ends of the upper cover 220 may be welded to the top of the end frame 230. Here, a venting hole H1 may be formed in the upper side of the end frame 230. Accordingly, the filtering member 300 and the mesh member 400 may be mounted to the end frame 230.

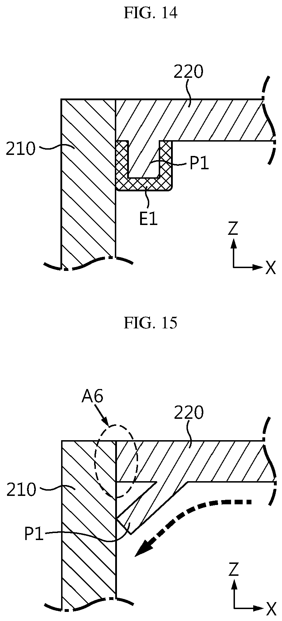

In this configuration of the module case 200, the upper cover 220 may have a blocking protrusion. This will be described in more detail with reference to FIGS. 13 and 14.

FIG. 13 is a cross-sectional view schematically showing some components of a battery module according to an embodiment of the present disclosure. Also, FIG. 14 is an enlarged view showing a portion A5 in FIG. 13.

Referring to FIGS. 13 and 14, the upper cover 220 may have a blocking protrusion at an end coupled to the lower frame 210, as indicated by P1. Here, the blocking protrusion P1 may be configured to protrude downward. More specifically, as shown in FIGS. 13 and 14, the blocking protrusion P1 may be configured to protrude downward at the left end of the upper cover 220. In addition, although not shown in the drawings, the blocking protrusion P1 may also be configured to protrude downward at the right end of the upper cover 220.

In addition, the blocking protrusion P1 may be formed to extend long along the coupling portion of the upper cover 220 and the lower frame 210. For example, the blocking protrusion P1 may be formed to extend long along the front and rear direction (Y-axis direction) at the left and right ends of the upper cover 220.

According to this embodiment of the present disclosure, the coupling force and sealing force of the coupling portion between the upper cover 220 and the lower frame 210 may be improved or stably maintained. For example, when a high-temperature venting gas or flame is ejected from the cell assembly 100, the blocking protrusion P1 may block the high-temperature venting gas or flame from directly heading to the coupling portion between the upper cover 220 and the lower frame 210. Therefore, according to this embodiment, it is possible to suppress weakening of the welded portion between the upper cover 220 and the lower frame 210. In addition, according to this embodiment, it is possible to prevent a high-temperature venting gas, flame or the like from leaking through a weakly welded or non-welded part between the upper cover 220 and the lower frame 210.

In addition, the upper cover 220 may include a sealing material, as indicated by E1 in FIG. 14. The sealing material E1 may be configured to surround at least a part of the blocking protrusion P1. For example, the sealing material E1 may be configured to surround the side and lower portions of the blocking protrusion P1. In particular, the sealing material E1 may be configured to seal the space between the blocking protrusion P1 and the lower frame 210.

Here, the sealing material E1 may be made of a material with higher elasticity than the blocking protrusion P1. In particular, the blocking protrusion P1 may be made of a metal material such as Al that is a material of the module case 200, and the sealing material E1 may be made of a material having better elasticity than the metal material. For example, the sealing material E1 may be made of a plastic material.

In particular, the sealing material E1 may be made of a material that is not easily combustible even by a high-temperature venting gas, flame or the like, for example, an incombustible, semi- incombustible, or flame-retardant material. For example, the sealing material E1 may include a heat-resistant plastic, a semi-incombustible urethane foam, a ceramic material, or the like.

According to this embodiment of the present disclosure, a high-temperature venting gas, flame or the like may be more reliably blocked from moving to the coupling portion between the upper cover 220 and the lower frame 210 by the sealing material E1. Therefore, it is possible to more reliably prevent the venting gas from leaking out through other parts except for the venting hole H1. In addition, a flame or the like may be prevented from leaking through the gap between the upper cover 220 and the lower frame 210. Also, according to this embodiment, it is also possible to prevent the welding or coupling portion between the upper cover 220 and the lower frame 210 from being weakened.

FIG. 15 is a cross-sectional view schematically showing some components of a battery module according to another embodiment of the present disclosure. For example, FIG. 15 may be regarded as a modification of the portion A5 of FIG. 13.

Referring to FIG. 15, a blocking protrusion P1 is provided to the upper cover 220, but the blocking protrusion P1 may be configured not in a vertical direction but in an inclined shape at a predetermined angle based on the vertical direction at the upper cover 220. In particular, the blocking protrusion P1 may be configured to protrude downward on the lower surface of the upper cover 220, while being closer to the lower frame 210 in the lower direction.

According to this embodiment of the present disclosure, the effect of blocking a venting gas or flame by the blocking protrusion P1 may be further improved. For example, even if a venting gas or flame is generated from the cell assembly 100 and moves to the left end along the lower surface of the upper cover 220, the venting gas or flame may be directed downward along the inclined surface of the blocking protrusion P1 formed at the left end of the upper cover 220, as indicated by an arrow in FIG. 15. In addition, the possibility that the venting gas or flame is directed to the coupling portion (welding portion) between the upper cover 220 and the lower frame 210, such as the portion indicated by A6 in FIG. 15, may be further reduced.

Moreover, in this embodiment, the bottom of the blocking protrusion P1 may come into contact with the inner surface of the lower frame 210. In this case, the effect of preventing leakage of a venting gas or flame by the blocking protrusion P1 may be further improved. Also, in the embodiment of FIG. 15, a sealing material may be provided on at least a part of the blocking protrusion P1. In particular, in the embodiment of FIG. 15, a sealing material is filled between the left side of the blocking protrusion P1 and the coupling portion indicated by A6 to improve the sealing force.

A battery pack according to the present disclosure may include one or more battery modules according to the present disclosure described above. In addition, the battery pack according to the present disclosure may further include various components other than these battery modules, for example components of the battery pack known at the time of filing of this application, such as a BMS or a bus bar, a pack case, a relay, and a current sensor.

The battery module according to the present disclosure may be applied to a vehicle such as an electric vehicle or a hybrid electric vehicle. That is, the vehicle according to the present disclosure may include the battery module according to the present disclosure or the battery pack according to the present disclosure. In addition, the vehicle according to the present disclosure may further include various other components included in a vehicle in addition to the battery module or the battery pack. For example, the vehicle according to the present disclosure may further include a vehicle body, a motor, a control device such as an electronic control unit (ECU), and the like in addition to the battery module according to the present disclosure.

Meanwhile, in this specification, terms indicating directions such as "up", "down", "left", "right", "front" and "rear" used, but these terms are merely for convenience of description and may vary depending on the location of an object or the location of an observer, as apparent to those skilled in the art.

### Reference Signs

100: cell assembly
110: battery cell
200: module case
210: lower frame, 220: upper cover, 230: end frame
300: filtering member
400: mesh member
401: inner mesh, 402: outer mesh
H1: venting hole
G1: mounting groove
B2, B2': stopper
P1: blocking protrusion
S1, S2: acicular body
E1: sealing material

## Claims

1. A battery module, comprising:
a cell assembly (100) including at least one battery cell (110);
a module case (200) configured to accommodate the cell assembly in an inner space thereof and having a venting hole (H1) formed to discharge a gas in the inner space to the outside;
a filtering member (300) provided in the venting hole of the module case and configured to filter foreign matter from flowing into the inner space from the outer space through the venting hole; and
a plurality of mesh members (400) respectively configured in a mesh form and provided on both sides of the filtering member.

2. The battery module according to claim 1,
wherein in the cell assembly, a plurality of pouch-type secondary batteries are stacked in a left and right direction in a state of being erected, and
the venting hole is formed in at least one of a front side and a rear side of the module case.

3. The battery module according to claim 1,
wherein the module case has a concave mounting groove (G1) formed around the venting hole so that the mesh member is inserted and mounted therein.

4. The battery module according to claim 3
wherein the venting hole is formed in plurality.

5. The battery module according to claim 4
wherein the mounting groove is formed long in a horizontal direction.

6. The battery module according to claim 1,
wherein the filtering member is at least partially inserted into the venting hole.

7. The battery module according to claim 1,
wherein the module case includes a stopper (B2, B2') configured to prevent at least a part of the mesh member provided outside the filtering member from moving in an outer direction.

8. The battery module according to claim 1,
wherein at least two of the plurality of mesh members have mesh holes of different sizes.

9. The battery module according to claim 1,
wherein at least some of the plurality of mesh members have an acicular body (S1, S2) formed to protrude in an inner or outer direction.

10. The battery module according to claim 1,
wherein the module case includes a lower frame (210) having a top opening and an upper cover (220) coupled to the top opening of the lower frame, and
the upper cover is welded to at least a part of the lower frame.

11. The battery module according to claim 10,
wherein the upper cover has a blocking protrusion (P1) formed on the coupling portion with the lower frame to protrude in a lower direction.

12. The battery module according to claim 11,
wherein the upper cover has a sealing material configured to surround the blocking protrusion.

13. A battery pack, comprising the battery module according to any one of claims 1 to 12.

14. A vehicle, comprising the battery module according to any one of claims 1 to 12.

## Patentansprüche

1. Batteriemodul, umfassend:
eine Zellenanordnung (100), welche wenigstens eine Batteriezelle (110) umfasst;
ein Modulgehäuse (200), welches dazu eingerichtet ist, die Zellenanordnung in einem inneren Raum davon aufzunehmen, und welches ein Lüftungsloch (H1) aufweist, welches gebildet ist, um ein Gas in dem inneren Raum nach Außen abzugeben;
ein Filterelement (300), welches in dem Lüftungsloch des Modulgehäuses bereitgestellt ist und welches dazu eingerichtet ist, Fremdmaterial zu filtern, welches von dem äußeren Raum durch das Lüftungsloch in den inneren Raum strömt; und
eine Mehrzahl von Maschenelementen (400), welche jeweils in einer Maschenform eingerichtet sind und welche an beiden Seiten des Filterelements bereitgestellt sind.

2. Batteriemodul nach Anspruch 1,
wobei, in der Zellenanordnung, eine Mehrzahl von Sekundärbatterien vom Beuteltyp in einem aufgerichteten Zustand in einer Links-und-Rechts-Richtung gestapelt sind, und
wobei das Lüftungsloch in wenigstens einer aus einer vorderen Seite und einer hinteren Seite des Modulgehäuses gebildet ist.

3. Batteriemodul nach Anspruch 1,
wobei das Modulgehäuse eine konkave Befestigungsnut (G1) aufweist, welche um das Lüftungsloch gebildet ist, so dass das Maschenelement darin eingeführt und befestigt ist.

4. Batteriemodul nach Anspruch 3,
wobei das Lüftungsloch in einer Mehrzahl gebildet ist.

5. Batteriemodul nach Anspruch 4,
wobei die Befestigungsnut in einer horizontalen Richtung lang gebildet ist.

6. Batteriemodul nach Anspruch 1,
wobei das Filterelement wenigstens teilweise in das Lüftungsloch eingeführt ist.

7. Batteriemodul nach Anspruch 1,
wobei das Modulgehäuse eine Stoppeinheit (B2, B2') umfasst, welche dazu eingerichtet ist, zu verhindern, dass sich wenigstens ein Teil des Maschenelements, welcher außerhalb des Filterelements bereitgestellt ist, in einer äußeren Richtung bewegt.

8. Batteriemodul nach Anspruch 1,
wobei wenigstens zwei aus der Mehrzahl von Maschenelementen Maschenlöcher mit unterschiedlichen Größen aufweisen.

9. Batteriemodul nach Anspruch 1,
wobei wenigstens einige aus der Mehrzahl von Maschenelementen einen nadelförmigen Körper (S1, S2) aufweisen, welcher gebildet ist, um in einer inneren oder äußeren Richtung hervorzustehen.

10. Batteriemodul nach Anspruch 1,
wobei das Modulgehäuse einen unteren Rahmen (210), welcher eine obere Öffnung aufweist, und eine obere Abdeckung (220) umfasst, welche mit der oberen Öffnung des unteren Rahmens gekoppelt ist, und
wobei die obere Abdeckung an wenigstens einen Teil des unteren Rahmens geschweißt ist.

11. Batteriemodul nach Anspruch 10,
wobei die obere Abdeckung einen Blockiervorsprung (P1) aufweist, welcher an dem Kopplungsabschnitt mit dem unteren Rahmen gebildet ist, um in einer unteren Richtung hervorzustehen.

12. Batteriemodul nach Anspruch 11,
wobei die obere Abdeckung ein Dichtungsmaterial aufweist, welches dazu eingerichtet ist, den Blockiervorsprung zu umgeben.

13. Batteriepack, umfassend das Batteriemodul nach einem der Ansprüche 1 bis 12.

14. Fahrzeug, umfassend das Batteriemodul nach einem der Ansprüche 1 bis 12.

## Revendications

1. Module de batterie, comprenant :
un ensemble d'éléments (100) comportant au moins un élément de batterie (110) ;
un boîtier de module (200) configuré pour accueillir l'ensemble d'éléments dans un espace intérieur de celui-ci et présentant un trou d'évent (H1) formé pour évacuer un gaz dans l'espace intérieur vers l'extérieur ;
un organe de filtrage (300) prévu dans le trou d'évent du boîtier de module et configuré pour filtrer les matières étrangères afin qu'elles ne s'écoulent pas dans l'espace intérieur à partir de l'espace extérieur à travers le trou d'évent ; et
une pluralité d'organes de maillage (400) configurés respectivement sous une forme de maillage et prévus des deux côtés de l'organe de filtrage.

2. Module de batterie selon la revendication 1,
dans lequel, dans l'ensemble d'éléments, une pluralité de batteries secondaires de type poche sont empilées dans une direction gauche et droite dans un état de montage, et le trou d'évent est formé dans au moins l'un d'un côté avant et d'un côté arrière du boîtier de module.

3. Module de batterie selon la revendication 1,
dans lequel le boîtier de module présente une rainure de montage concave (G1) formée autour du trou d'évent de sorte que l'organe de maillage soit inséré et monté dans celle-ci.

4. Module de batterie selon la revendication 3,
dans lequel le trou d'évent est formé en pluralité.

5. Module de batterie selon la revendication 4,
dans lequel la rainure de montage est formée allongée dans une direction horizontale.

6. Module de batterie selon la revendication 1,
dans lequel l'organe de filtrage est au moins partiellement inséré dans le trou d'évent.

7. Module de batterie selon la revendication 1,
dans lequel le boîtier de module comporte une butée (B2, B2') configurée pour empêcher au moins une partie de l'organe de maillage prévu à l'extérieur de l'organe de filtrage de se déplacer dans une direction vers l'extérieur.

8. Module de batterie selon la revendication 1,
dans lequel au moins deux parmi la pluralité d'organes de maillage présentent des trous de maillage de tailles différentes.

9. Module de batterie selon la revendication 1,
dans lequel au moins certains de la pluralité d'organes de maillage présentent un corps aciculaire (S1, S2) formé pour faire saillie dans une direction vers l'intérieur ou vers l'extérieur.

10. Module de batterie selon la revendication 1,
dans lequel le boîtier de module comporte un cadre inférieur (210) présentant une ouverture supérieure et un couvercle supérieur (220) couplé à l'ouverture supérieure du cadre inférieur, et
le couvercle supérieur est soudé à au moins une partie du cadre inférieur.

11. Module de batterie selon la revendication 10,
dans lequel le couvercle supérieur présente une saillie de blocage (P1) formée sur la partie de couplage avec le cadre inférieur pour faire saillie dans une direction vers le bas.

12. Module de batterie selon la revendication 11,
dans lequel le couvercle supérieur présente un matériau d'étanchéité configuré pour entourer la saillie de blocage.

13. Bloc-batterie, comprenant le module de batterie selon l'une quelconque des revendications 1 à 12.

14. Véhicule, comprenant le module de batterie selon l'une quelconque des revendications 1 à 12.
